# EUROPEAN PATENT APPLICATION

(11) **EP 2 957 733 A1**
(43) Date of publication of application: **23.12.2015**
(21) Application number: 15171168.6
(22) Date of filing: 09.06.2015
(51) Int. Cl.: F01K 13/02, F01K 23/10, F02C 3/30

(54) **METHOD FOR INCREASING THE POWER OF A COMBINED-CYCLE POWER PLANT, AND COMBINED-CYCLE POWER PLANT FOR CONDUCTING SAID METHOD**

(30) Priority: 18.06.2014 EP 14172982
(71) Applicant: ALSTOM Technology Ltd, 5400 Baden (CH)
(72) Inventor: Reiter, Wilhelm, 79790 Küssaberg (DE); Lilley, Darrel Shayne, 5453 Remetschwil (CH); Li, Hongtao, 5000 Aarau (CH)
(74) Representative: General Electric Technology GmbH

(57) **Abstract**

The invention relates to a method for temporary increasing the power of a gas turbine (11), which is part of a combined-cycle power plant (10), wherein the exhaust gas of said gas turbine (11) is used in a heat recovery steam generator (13) to generate steam for a water/steam cycle including a steam turbine (12) with a high pressure steam turbine (20), an intermediate pressure steam turbine (21) and a low pressure steam turbine (22), whereby said method comprises the step of injecting steam from said water/steam cycle at a predetermined injection pressure into said gas turbine (11).

The efficiency is improved by taking steam of a lower pressure than said predetermined injection pressure from said water/steam cycle, increasing the pressure of said steam taken from said water/steam cycle to said predetermined injection pressure by subjecting it in separate compressing means (14) to a compression step, and injecting said compressed steam into said gas turbine (11).

Preferably, said separate compressing means (14) comprises at least one steamdriven ejector.

## Description

### BACKGROUND OF THE INVENTION

The present invention relates to combined-cycle power plants. It refers to a method for temporary increasing the power of a gas turbine, which is part of a combined-cycle power plant according to the preamble of claim 1.

It further refers to a combined-cycle power plant for conducting such method.

### PRIOR ART

In combined-cycle power plants (CCPPs) the hot exhaust gas of one or more gas turbines (GTs) is used to generate steam for a separate water/steam cycle in a subsequent heat recovery steam generator (HRSG). The steam generated in the HRSG is used to drive a steam turbine, which often comprises a high pressure turbine (HP turbine), an intermediate pressure turbine (IP turbine) and a low pressure turbine (LP turbine). All turbines are connected with the HRSG to receive from and feed back to the HRSG steam at various pressures and temperatures.

According to the current State of the Art, the GT in a CCPP uses steam injection for temporary power increase, peak demands, etc.. For this purpose, steam is injected into the combustor or into the cooling system of the GT, which steam is extracted from the water/steam cycle.

In the case of the applicant's well-known gas turbines of type GT26/GT24 steam is extracted from the high pressure live steam line, which supplies the HP turbine of the steam turbine, or the once through cooler(OTC) feed line.

However, this kind of GT steam injection reduces the overall efficiency of the power plant.

### SUMMARY OF THE INVENTION

It is an object of the present invention to provide a method for GT steam injection, which results in an improved efficiency.

It is a further object of the invention to disclose a combined-cycle power plant for conducting such a method.

These and other objects are obtained by a method according to Claim 1 and a combined-cycle power plant according to Claim 8.

The inventive method for temporary increasing the power of a gas turbine, which is part of a combined-cycle power plant, wherein the exhaust gas of said gas turbine is used in a heat recovery steam generator to generate steam for a water/steam cycle including a steam turbine with a high pressure steam turbine, an intermediate pressure steam turbine and a low pressure steam turbine, comprises the step of injecting steam from said water/steam cycle at a predetermined injection pressure into said gas turbine.

It is characterized in that steam of a lower pressure than said predetermined injection pressure is taken from said water/steam cycle, that the pressure of said steam taken from said water/steam cycle is increased to said predetermined injection pressure by subjecting it in separate compressing means to a compression step, and that said compressed steam is injected into said gas turbine.

An embodiment of the method according to the invention is characterized in that said separate compressing means comprises at least one steam-driven ejector.

Another embodiment of the method according to the invention is characterized in that said separate compressing means comprises at least two steam-driven ejectors with different fixed steam nozzles or with a fixed steam nozzle and a variable steam nozzle.

Just Another embodiment of the method according to the invention is characterized in that said at least one steam-driven ejector is driven by high pressure live steam, which is generated in said heat recovery steam generator and used to drive said high pressure steam turbine, that said steam of a lower pressure, which is compressed by means of said at least one steam-driven ejector, is cold reheat steam taken at the outlet of said high pressure steam turbine, and by mixing the high and lower pressure flow in said at least one steam-driven ejector an intermediate pressure flow is generated.

More specifically, the mass flow ratio between high pressure live steam and cold reheat steam is in the order of 2:1.

Another embodiment of the method according to the invention is characterized in that said at least one steam-driven ejector is driven by high pressure steam, which is on a lower temperature level than a high pressure live steam, which is generated in said heat recovery steam generator and used to drive said high pressure steam turbine, and that said high pressure steam is taken from said heat recovery steam generator upstream of a superheater section. The high pressure steam for driving the ejector can for example be taken from a high pressure drum or high pressure evaporator of the steam generator.

In a further embodiment a de-superheater can be arranged in the suction steam line before the ejector or other compression means to reduce its superheating degree. The stem to the ejector or other compression means is de-superheated to reduce the compression work needed to boost it to the pressure level required for injection into the gas turbine. Thus the amount of high pressure steam to increase the pressure level of the suction steam is reduced. The heat from de-superheating can be used for example for fuel preheating, for feedwater preheating or as heat source for other process steps.

A further embodiment of the method according to the invention is characterized in that the engagement of said at least one steam-driven ejector is controlled and/or switched on/off during operation, depending on available pressure differences or levels.

Furthermore, said gas turbine may be equipped with a turbine cooling air system, and said steam from said water/steam cycle is injected at a predetermined injection pressure into said turbine cooling air system of said gas turbine.

When said gas turbine is a gas turbine with sequential combustion comprising a first and second combustor and a first and second turbine, said steam from said water/steam cycle is preferably injected at a predetermined injection pressure into said gas turbine upstream of said second combustor, especially into said first turbine.

When said gas turbine is equipped with at least one combustor, said steam from said water/steam cycle is preferably injected at a predetermined injection pressure directly into said at least one combustor, especially together with a fuel for said combustor.

Usually, said gas turbine is equipped with at least one compressor, which supplies compressed air to a compressor plenum. Said steam from said water/steam cycle is preferably injected at a predetermined injection pressure into said the compressor plenum.

The inventive combined-cycle power plant for conducting the method according to the invention comprises a gas turbine the exhaust gas of which passes through a heat recovery steam generator, which is part of a water/steam cycle and supplies a steam turbine with steam at various pressures and temperatures.

It is characterized in that a steam line is provided between the water/steam cycle and said gas turbine for injecting steam from said water/steam cycle at a predetermined injection pressure into said gas turbine, and that a separate compressing means is inserted into said steam line for increasing the pressure of the steam flowing through said steam line.

An embodiment of the inventive combined-cycle power plant is characterized in that said separate compressing means comprises at least one steam-driven ejector with a fixed or variable steam nozzle.

Another embodiment of the inventive combined-cycle power plant is characterized in that said separate compressing means comprises at least two steam-driven ejectors with different fixed steam nozzles or with a fixed steam nozzle and a variable steam nozzle.

Just another embodiment of the inventive combined-cycle power plant is characterized in that said steam turbine comprises a high pressure steam turbine, which is connected with its inlet by a first HRSG connection to said heat recovery steam generator to receive high pressure live steam from said heat recovery steam generator, and that said at least one steam-driven ejector is driven by said high pressure (HP) live steam, which is supplied via a high pressure live steam line from said first HRSG connection.

Specifically, said high pressure steam turbine is connected with its outlet by a second HRSG connection to said heat recovery steam generator to feed cold reheat steam to said heat recovery steam generator, and that said at least one steam-driven ejector receives cold reheat steam, which is supplied via a cold reheat line from said second HRSG connection.

Another embodiment of the inventive combined-cycle power plant is characterized in that a switchable bypass line is provided for bypassing that said separate compressing means.

When said gas turbine is equipped with a turbine cooling air system, said steam line may be connected to said turbine cooling air system of said gas turbine.

A further embodiment of the inventive combined-cycle power plant is characterized in that said gas turbine is a gas turbine with sequential combustion comprising a first and second combustor and a first and second turbine, and that said steam line is connected to said gas turbine upstream of said second combustor, especially to said first turbine.

Another embodiment of the inventive combined-cycle power plant is characterized in that said gas turbine is equipped with at least one combustor, and that said steam line is connected to said at least one combustor.

Besides the combined cycle power plant a method for operating such a plant is object of the invention. The combined-cycle power plant comprises a gas turbine the exhaust gas of which passes through a heat recovery steam generator, which is part of a water/steam cycle and supplies a steam turbine with steam at various pressures and temperatures. A steam line is provided between the water/steam cycle and said gas turbine for injecting steam from said water/steam cycle at a predetermined injection pressure into said gas turbine, and that a separate compressing means is inserted into said steam line for increasing the pressure of the steam flowing through said steam line.

According to a first embodiment of the method loading of the combined-cycle power plant comprises the following steps:
- first start the gas turbine and load the gas turbine to a high part load operating point or base load,
- start the steam turbine after the start of the gas turbine and before the gas turbine reaches base load or a steady high part load operating point,
   - after gas turbine reaches base load or a steady high part load operating point and before steam turbine reaches base load initiate high pressure live steam injection into the gas turbine via a bypass line around the compressing means,
      continue to load the steam turbine to base load or a high part load operating point,
reduce the high pressure live steam flow for steam injection into the into the gas turbine and simultaneously start injecting steam from a cold reheat line by subjecting it in separate compressing means to a compression step, and injecting the compressed steam into the gas turbine.

Base load is the maximum continuous load which can be derived by the gas turbine, respectively steam turbine at given operating conditions. A high part load operating point in this context is a load point with at least 80% of the base load power output preferably more than 90% of the base load power output of the gas turbine, respectively steam turbine.

The above described method can advantageously be used for fast loading of the plant to a high load with steam injection. The "booster" (steam injection with compressing means) can start before the steam turbine reaches base load or a high part load operating point or after the team turbine reaches base load or a high part load operating point.

### BRIEF DESCRIPTION OF THE DRAWINGS

The present invention is now to be explained more closely by means of different embodiments and with reference to the attached drawings.
- Fig. 1: a simplified block diagram of a combined-cycle power plant with a basic gas turbine according to an embodiment of the invention;
- Fig. 2: a simplified block diagram of a combined-cycle power plant with a gas turbine with sequential combustion according to an embodiment of the invention; and
- Fig. 3: various embodiments of the ejector-equipped compressing means of the invention.

### DETAILED DESCRIPTION OF DIFFERENT EMBODIMENTS OF THE INVENTION

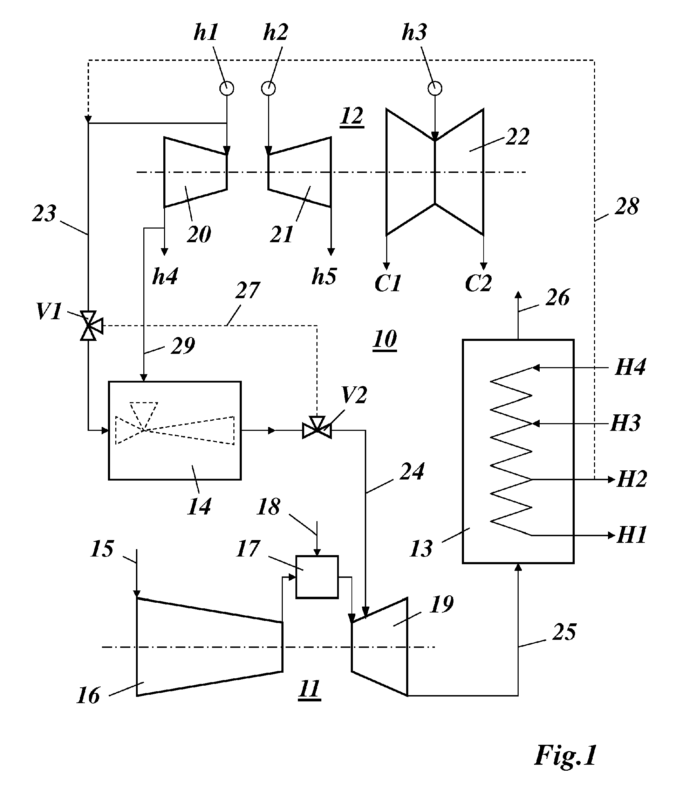

Fig. 1 shows a simplified block diagram of a combined-cycle power plant with a basic gas turbine according to an embodiment of the invention. The combined-cycle power plant 10 of Fig. 1 comprises as main elements a gas turbine 11 with a compressor 16, a combustor 17 and a turbine 19, a heat recovery steam generator 13, and a steam turbine 12 with a high pressure steam turbine 20, an intermediate pressure steam turbine 21, and a low pressure steam turbine 22.

The gas turbine 11 receives air at an air inlet 15, which is compressed by compressor 16 and used in combustor 17 to burn a (gaseous and/or liquid) fuel 18. The hot gases from combustor 17 drive turbine 19 and afterwards flow through an exhaust gas line 25 to heat recovery steam generator 13 to generate and/or reheat steam, and finally into a stack 26.

Steam turbines 20 and 21 are connected via various HRSG connections h1, h4 and h2, h5 to heat recovery steam generator 13 (four exemplary HRSG accesses H1-H4 are shown in Fig. 1). Steam turbine 22 receives steam from heat recovery steam generator 13 via HRSG connection h3 and is connected at its outlet to a condenser (not shown) via condenser connections C1 and C2.

High pressure steam turbine 20 receives high pressure live steam via HRSG connection h1 and feeds back to heat recovery steam generator 13 cold reheat steam via HRSG connection h4.

The HRSG can have a superheater section for example between accesses H1 and H2 (not shown). Further, a drum can be arranged for the different pressure levels (not shown).

According to the embodiment shown in Fig. 1 steam injection into the gas turbine 11 at turbine 19 uses cold reheat steam, which flows from HRSG connection h4 via cold reheat line 29 and steam injecting line 24 to turbine 19 of the GT 11. As the pressure of the cold reheat steam is in most cases not sufficient enough to allow a direct injection, it is increased by a compressing means 14. As is indicated by the dashed lines in the block of the compressing means 14, a steam-driven ejector is used to increase the pressure of the cold reheat steam. For this purpose, high pressure live steam is taken from the inlet side of high pressure steam turbine 20 (HRSG connection h1) and fed via high pressure live steam line 23 to the nozzle of the steam-driven ejector of the compressing means 14. The high pressure live steam mixes with the cold reheat steam in said ejector and increases its pressure.

Thus, cold reheat steam pressure is increased by compressing means, in particular an ejector. The ejector is "driven" by HP live steam. The engagement of the ejector can be controlled, switched on/off during operation, depending on available pressure differences or levels. Instead of HP live steam HP steam can be used to drive the ejector from a lower HP temperature level e.g. upstream of a superheater section in the HRSG instead of HP live steam (via pre-superheater steam line 28 in Fig. 1).

The consideration is that it is more efficient to take steam from the intermediate pressure line (i.e. cold reheat steam), where it has already done work in the HP steam turbine 20. However, the pressure level is not sufficiently high, although close to the desired value.

The efficiency and power advantage to use only cold reheat steam instead of HP steam in a combined-cycle can be significant. Since the cold reheat pressure is not far from the desired pressure level, the cold reheat steam can easily be compressed to bring it to the desired level.

The compression is favourably done with an ejector, which has been disclosed in a different application in document DE 197 02 830 C1. However, the ejector needs a higher pressure source. By mixing the high and low pressure flow in such an ejector an intermediate pressure flow is generated. The high pressure source is the HP live steam (HRSG connection h1). The low pressure source is the cold reheat steam (HRSG connection h4). The necessary mass flow ratio should be in the order of 2:1 (HP:IP).

The ejector of the compressing means 14 can be in operation under all steam injection load points, or it can be in operation just at load points where the cold reheat steam pressure is not sufficient. These can be cases where the water/steam cycle is not at base load yet.

A variation of the invention is to use HP steam to (a) drive the ejector or (b) directly inject into the GT from a lower temperature source, e.g. before entering the superheater section in the HRSG 13.

Since there is HP steam required to drive the ejector, the potential benefit for the combined cycle (CC) is in the order of 0.2%-points and 1 MW.

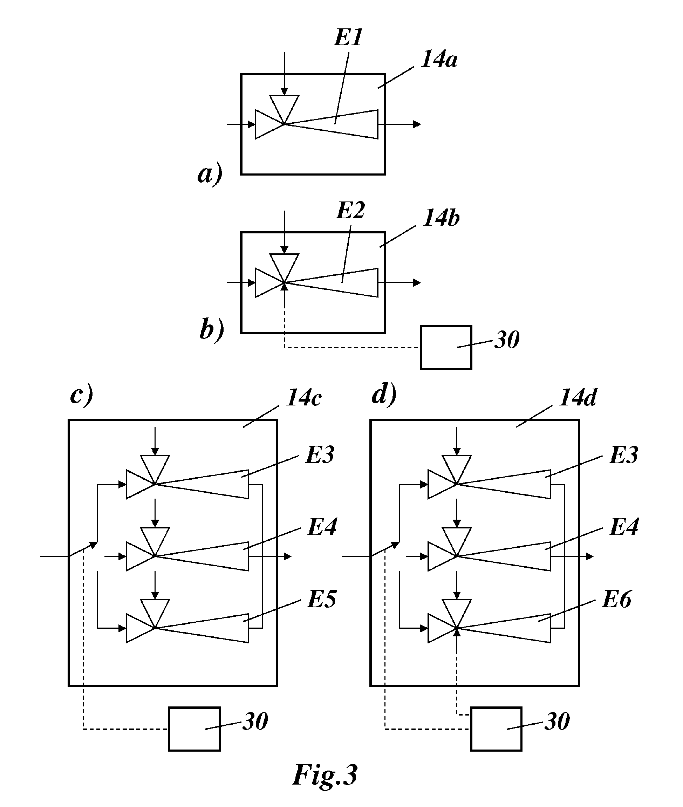

There are various configurations possible for the ejector-equipped compressing means 14. Some of these configurations are shown in Fig. 3 (a) to (d).

Fig. 3(a) shows a compressing means 14a with an ejector E1, which is a fixed nozzle steam ejector (the driving steam nozzle has a fixed cross section).

In this configuration, the design of fixed nozzle steam ejector E1 may be optimized according to the motive and suction steam pressures, and the targeted discharge steam pressure and mass flow at the mostly operated condition (design point).

Fig. 3(b) shows a compressing means 14b with an ejector E2, which has a variable nozzle (indicated by the additional arrow). The variable nozzle steam ejector E2, which can be controlled by a control unit 30, may be designed in addition to the fixed nozzle ejector E1 to cover the entire or part of the off design operation range, and may be optimized for selected part load operations.

Fig. 3(c) shows a compressing means 14c with a plurality of fixed nozzle steam ejectors E3, E4, E5. They are designed to improve the efficiencies at the mostly operated condition (design point) and over the entire operation range and can be controlled by a control unit 30. Similar to Fig. 3(c), a plurality of variable nozzle steam ejectors may be combined.

Fig. 3(d) shows a combination of fixed nozzle steam ejectors E3 and E4 with a variable nozzle steam ejector E6.

Thus, depending on the operation range (discharge steam mass flow, suction to discharge pressure ratio etc.), efficiency, cost of requirements, fixed and/or variable nozzle ejectors can be considered.

The fix nozzle steam ejector must be designed for a part-load case based on lowest available motive steam pressure, targeted discharge steam pressure and mass flow, while the efficiency at full load is lower. To improve efficiencies at design point and over the operation range, multiple fix nozzle ejectors may need to be combined (see above).

The variable nozzle ejector has relatively high efficiencies over larger range of operation (in terms of motive steam pressure / discharge mass flow), which is comparably more expensive than fix nozzle ejector. Depending on the range of operation, multiple variable nozzle ejectors may also needed sometime.

Furthermore, as shown in Fig. 1, there may be provided a steam bypass line 27 leading from the ejector's motive steam line 23 to the discharge steam line 24 to bypass the ejector(s), if necessary. This bypass line 27 can be used (activated by valves V1, V2) to provide the GT 11 directly with high pressure live steam for steam injection, when the ejector's discharge pressure or flow are not sufficient, or in case of an ejector(s)' failure.

Furthermore, a de-superheater may be arranged in the suction steam line 29 before the ejector to reduce its superheating degree. The suction steam temperature at the ejector after de-superheating is then at a saturation temperature of + 3∼50 K.

The suction steam can also be hot reheat steam to the steam turbine or from the HRSG.

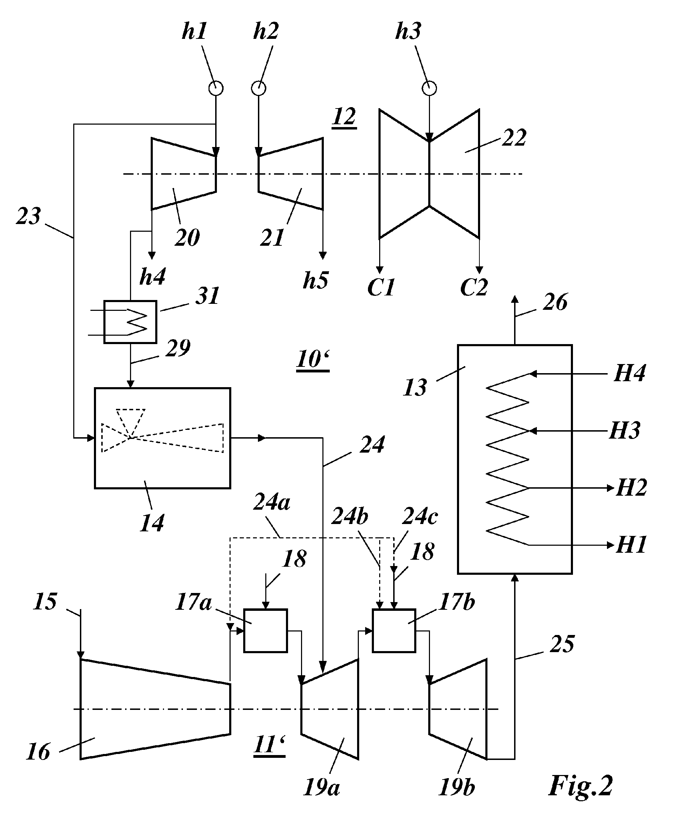

Fig. 2 shows a simplified block diagram of a combined-cycle power plant 10' with a gas turbine 11' with sequential combustion according to another embodiment of the invention. Gas turbine 11' has a first and second combustor 17a, 17b and first and second turbines 19a and 19b, whereby turbine 19a is a high pressure turbine. In case of such a GT, there are several possibilities to inject the compressed steam from compressing means 14. These possibilities are indicated in Fig. 2 by dashed lines from compressing means 14 to gas turbine 11'.

An optional de-superheater 31 is shown in Fig. 2 in the suction steam line 29 before the ejector to reduce its superheating degree.

In general, the steam can be injected into the turbine cooling air system.
- In a gas turbine 11' with sequential combustion it is injected preferably upstream of the second combustor 17b, e.g. in the high pressure turbine 19a.

The steam can also be injected directly into the combustor 17b (or burner)
- Especially, the steam can be injected together with the fuel 18.

Finally, the steam can be injected into the compressor plenum.

As has already been mentioned above, the low pressure steam can be de-superheated to improve the ejector efficiency (mass flow rate of boosted steam to high pressure steam). De-superheating can be done by heat exchange using the heat for example for feed water preheating. De-superheating can also be done by water injection into the steam thereby increasing the steam flow.

The bypass line 27 described above can be used for fast loading of the system. This allows start of the steam injection before the steam pressures reach base load level.

### LIST OF REFERENCE NUMERALS

- 10, 10': combined cycle power plant (CCPP)
- 11,11': gas turbine
- 12: steam turbine
- 13: heat recovery steam generator (HRSG)
- 14,14a-d: compressing means
- 15: air inlet
- 16: compressor
- 17,17a,b: combustor
- 18: fuel
- 19,19a,b: turbine
- 20: high pressure steam turbine (HP turbine)
- 21: intermediate pressure steam turbine (IP turbine)
- 22: low pressure steam turbine (LP turbine)
- 23: high pressure live steam line
- 24,24a-c: steam injecting line
- 25: exhaust gas line
- 26: stack
- 27: bypass line
- 28: pre-superheater steam line
- 29: cold reheat line
- 30: control unit
- 31: de-superheater
- C1,C2: condenser connection
- E1-E6: ejector
- h1-h5: HRSG connection
- H1-H4: HRSG access

## Claims

1. Method for temporary increasing the power of a gas turbine (11, 11'), which is part of a combined-cycle power plant (10, 10'), wherein the exhaust gas of said gas turbine (11, 11') is used in a heat recovery steam generator (13) to generate steam for a water/steam cycle including a steam turbine (12) with a high pressure steam turbine (20), an intermediate pressure steam turbine (21) and a low pressure steam turbine (22), said method comprising the step of injecting steam from said water/steam cycle at a predetermined injection pressure into said gas turbine (11, 11'), **characterized in that** steam of a lower pressure than said predetermined injection pressure is taken from said water/steam cycle, that the pressure of said steam taken from said water/steam cycle is increased to said predetermined injection pressure by subjecting it in separate compressing means (14; 14a-d) to a compression step, and that said compressed steam is injected into said gas turbine (11, 11').

2. Method as claimed in Claim 1, **characterized in that** said separate compressing means (14; 14a-d) comprises at least one steam-driven ejector (E1-E6) with a fixed or variable steam nozzle.

3. Method as claimed in Claim 2, **characterized in that** said separate compressing means (14; 14a-d) comprises at least two steam-driven ejectors (E1-E6) with different fixed steam nozzles or with a fixed steam nozzle and a variable steam nozzle.

4. Method as claimed in Claim 2, **characterized in that** said at least one steam-driven ejector (E1-E6) is driven by high pressure (HP) live steam, which is generated in said heat recovery steam generator (13) and used to drive said high pressure steam turbine (20), that said steam of a lower pressure, which is compressed by means of said at least one steam-driven ejector (E1-E6), is cold reheat steam taken at the outlet (h4) of said high pressure steam turbine (20), and that by mixing the high and lower pressure flow in said at least one steam-driven ejector (E1-E6) an intermediate pressure flow is generated.

5. Method as claimed in Claim 4, **characterized in that** the mass flow ratio between high pressure live steam and cold reheat steam is in the order of 2:1.

6. Method as claimed in Claim 2, **characterized in that** said at least one steam-driven ejector (E1-E6) is driven by high pressure (HP) steam, which is on a lower temperature level than a high pressure (HP) live steam, which is generated in said heat recovery steam generator (13) and used to drive said high pressure steam turbine (20), and that said high pressure (HP) steam is taken from said heat recovery steam generator (13) upstream of a superheater section.

7. Method as claimed in one of the preceding claims, **characterized in that** the suction steam is de-superheated before subjecting it to the separate compressing means (14; 14a-d) in the compression step.

8. Combined-cycle power plant (10) for conducting a method as claimed in one of the Claims 1 to 7, comprising a gas turbine (11, 11') the exhaust gas of which passes through a heat recovery steam generator (13), which is part of a water/steam cycle and supplies a steam turbine (12) with steam at various pressures and temperatures, **characterized in that** a steam line (29, 24) is provided between the water/steam cycle and said gas turbine (11, 11') for injecting steam from said water/steam cycle at a predetermined injection pressure into said gas turbine (11, 11'), and that a separate compressing means (14; 14a-d) is inserted into said steam line (29, 24) for increasing the pressure of the steam flowing through said steam line (29, 24).

9. Combined-cycle power plant as claimed in Claim 8, **characterized in that** said separate compressing means (14; 14a-d) comprises at least one steam-driven ejector (E1-E6) with a fixed or variable steam nozzle.

10. Combined-cycle power plant as claimed in Claim 9, **characterized in that** said separate compressing means (14; 14a-d) comprises at least two steam-driven ejectors (E1-E6) with different fixed steam nozzles or with a fixed steam nozzle and a variable steam nozzle.

11. Combined-cycle power plant as claimed in Claim 9, **characterized in that** said steam turbine (12) comprises a high pressure steam turbine (20), which is connected with its inlet by a first HRSG connection (h1) to said heat recovery steam generator (13) to receive high pressure live steam from said heat recovery steam generator (13), and that said at least one steam-driven ejector (E1-E6) is driven by said high pressure (HP) live steam, which is supplied via a high pressure live steam line (24) from said first HRSG connection (h1).

12. Combined-cycle power plant as claimed in Claim 11, **characterized in that** said high pressure steam turbine (20) is connected with its outlet by a second HRSG connection (h4) to said heat recovery steam generator (13) to feed cold reheat steam to said heat recovery steam generator (13), and that said at least one steam-driven ejector (E1-E6) receives cold reheat steam, which is supplied via a cold reheat line (29) from said second HRSG connection (h4).

13. Combined-cycle power plant as claimed in Claim 8, **characterized in that** a switchable bypass line (27) is provided for bypassing that said separate compressing means (14; 14a-d).

14. Combined-cycle power plant as claimed in Claim 8, **characterized in that** said gas turbine (11') is a gas turbine with sequential combustion comprising a first and second combustor (17a, 17b) and a first and second turbine (19a, 19b), and that said steam line (29, 24) is connected to said gas turbine (11') upstream of said second combustor (17b), especially to said first turbine (19a).

15. Method for operating a combined-cycle power plant as claimed in claim 8, **characterized in that** starting and loading of the combined-cycle power plant comprises the following steps:
- first starting the gas turbine (11, 11')
- loading the gas turbine (11, 11') to a high part load operating point or base load,
- starting the steam turbine (20, 21, 22) after the start of the gas turbine (11, 11') and before the gas turbine (11, 11') reaches base load or a steady high part load operating point,
. after gas turbine (11, 11') reaches base load or a steady high part load operating point and before steam turbine (20, 21, 22) reaches base load initiate high pressure live steam (23) injection into the gas turbine (11, 11') via a bypass line (27) around the compressing means (14, 14a-d),
continuing to load the steam turbine (20, 21, 22) to base load or a high part load operating point,
reducing the high pressure live steam (23) flow for steam injection into the into the gas turbine (11, 11') and simultaneously start injecting steam from a cold reheat line (29) by subjecting it in separate compressing means (14; 14a-d) to a compression step, and injecting the compressed steam into the gas turbine (11, 11').
